# EUROPEAN PATENT SPECIFICATION

(11) **EP 3 060 979 B1**
(45) Date of publication and mention of the grant of the patent: **05.08.2020**
(21) Application number: 14855674.9
(22) Date of filing: 24.10.2014
(51) Int. Cl.: G06F 9/06

(54) **PROCESSOR AND METHODS FOR IMMEDIATE HANDLING AND FLAG HANDLING**
PROZESSOR UND VERFAHREN ZUR SOFORTIGEN MARKIERUNGSHANDHABUNG
PROCESSEUR ET PROCÉDÉS DE GESTION DE BUS IMMÉDIAT ET DE GESTION DE DRAPEAUX

(30) Priority: 25.10.2013 US 201361895715 P
(43) Date of publication of application: 31.08.2016
(73) Proprietor: Advanced Micro Devices, Inc., Santa Clara, CA 95054 (US)
(72) Inventor: VENKATACHAR, Ashok, Santa Clara, California 95054 (US); PUNUKOLLU, Karthik, Sunnyvale, California 94085 (US); AREKAPUDI, Srikanth, Sunnyvale, California 94086 (US); CHITNIS, Samir A., Santa Clara, California 95051 (US); TALPES, Emil, San Mateo, California 94403 (US)
(74) Representative: Williams, Michael David
(86) International application number: PCT/US2014/062180
(87) International publication number: WO 2015/061687

(56) References cited:
- EP-A2- 0 686 913
- US-A1- 2005 071 518
- US-A1- 2009 177 868
- US-A1- 2010 312 989
- US-A1- 2010 312 989
- US-A1- 2012 260 071
- US-A1- 2013 145 127

## Description

### CROSS REFERENCE TO RELATED APPLICATIONS

This application claims the benefit of U.S. provisional application No. 61/895,715 filed October 25, 2013.

### TECHNICAL FIELD

The disclosed embodiments are generally directed to electronic circuits.

### BACKGROUND

Processors, (e.g., central processing units (CPUs), graphics processing units (GPUs), and the like), use multiple cores and pipeline architectures in order to achieve faster processing speeds. To facilitate faster execution throughput, "pipeline" execution of operations within decoder and execution units of a processor core is used. However, there is a continuing demand for faster and efficient throughput for processors.

### SUMMARY OF EMBODIMENTS

Described herein are some embodiments of methods and processors for flag renaming in groups to eliminate dependencies of instructions. Decoder and execution units in the processor may be configured to rename flags into groups that allow each group to be treated separately as appropriate. This flag renaming eliminates flag dependencies with respect to instructions. This allows an instruction to write exactly the flags that the instruction wants without having to create merge dependencies.

Described herein are some embodiments of methods and processors for handling immediate values embedded in instructions. In an embodiment, the handling of immediate values embedded in instructions may be achieved by adding a 16 bit immediate bus and a 4 bit encoding/control bus at the interface between decode and execution units in the processor. The encoding space is minimized by overloading encoding information onto the 16 bit immediate bus, thus efficiently using storage and route resource while transferring information from the decode and execution units. In the event of an 8 or 12 bit immediate, the upper 4 bits of the immediate bus may contain the encoding bits and the encoding/control bus may indicate the ISA type. In the event of a 16 bit immediate, the encoding/control bus contains the encoding bits. The encoding/control bus will have the information of when to look at the top four bits of the immediate bus and when the data should be used as a whole. Thus, the overall encoding space is increased without needing additional bits at the interface. EP0686 913 discloses a super scalar microprocessor with flag operand renaming and forwarding apparatus.

### BRIEF DESCRIPTION OF THE DRAWINGS

A more detailed understanding may be had from the following description, given by way of example in conjunction with the accompanying drawings wherein:
Figure 1 is a block diagram of an example device in which one or more disclosed embodiments may be implemented;
Figure 2 is an example instruction pipeline for a processor in accordance with some embodiments;
Figure 3 is an example block diagram for flag handling in accordance with some embodiments;
Figure 4 is an example illustration of data and flag dependencies;
Figure 5 is an example execution pattern for the example in Figure 5;
Figure 6 is an example illustration of flag dependencies when using a single entity flag combination;
Figure 7 is an example execution pattern for the example in Figure 7;
Figure 8 is an example illustration of true data flag dependencies in accordance with some embodiments;
Figure 9 is an example of regular operation using the true data flag dependencies in accordance with some embodiments;
Figure 10 is an example of flush operation using the true data flag dependencies in accordance with some embodiments;
Figure 11 is an example of poison generation using the true data flag dependencies in accordance with some embodiments;
Figure 12 is an example of poison operation using the true data flag dependencies in accordance with some embodiments;
Figures 13A and 13B are examples of an instruction with an immediate and a constant in accordance with some embodiments;
Figures 14A and 14B are examples of another instruction with an immediate and a constant in accordance with some embodiments;
Figure 15 is an example of an instruction with an immediate and a constant in accordance with some embodiments; and
Figure 16 is an example block diagram of immediate handling in accordance with some embodiments.

### DETAILED DESCRIPTION OF THE EMBODIMENTS

For the sake of brevity, conventional techniques related to integrated circuit design, caching, memory operations, memory controllers, and other functional aspects of the systems (and the individual operating components of the systems) have not been described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used in the following description for the purpose of reference only, and thus are not intended to be limiting, and the terms "first", "second" and other such numerical terms referring to structures do not imply a sequence or order unless clearly indicated by the context.

The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the figures may depict one exemplary arrangement of elements, additional intervening elements, devices, features, or components may be present in an embodiment of the depicted subject matter.

While at least one exemplary embodiment has been presented in the following description, it should be appreciated that a vast number of variations exist. It will also be appreciated that the exemplary embodiment or embodiments described herein are not intended to limit the scope, applicability, or configuration of the claimed subject matter in any way. Rather, the foregoing detailed description will provide those skilled in the art with a guide for implementing the described embodiment or embodiments. It will be understood that various changes may be made in the function and arrangement of elements without departing from the scope defined by the claims.

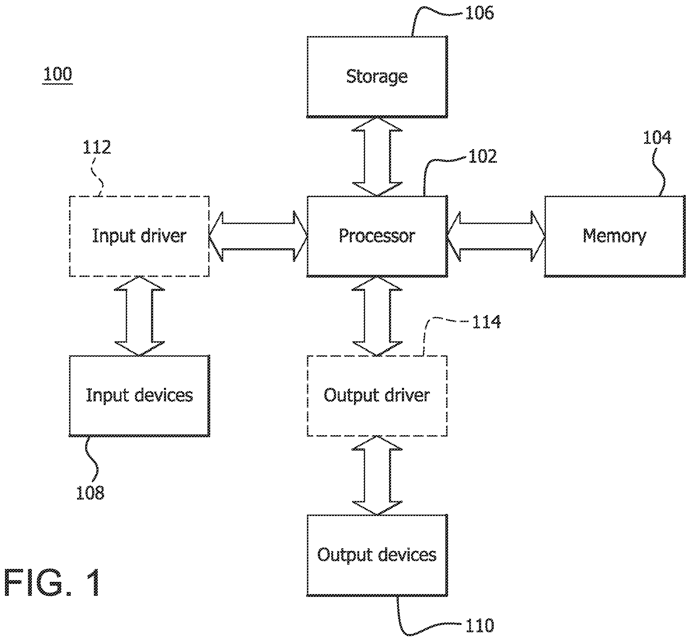

Figure 1 is a block diagram of an example device 100 in which one or more disclosed embodiments may be implemented. The device 100 may include, for example, a computer, a gaming device, a handheld device, a set-top box, a television, a mobile phone, or a tablet computer. The device 100 includes a processor 102, a memory 104, a storage 106, one or more input devices 108, and one or more output devices 110. The device 100 may also optionally include an input driver 112 and an output driver 114. It is understood that the device 100 may include additional components not shown in Figure 1.

The processor 102 may include a central processing unit (CPU), a graphics processing unit (GPU), a CPU and GPU located on the same die, or one or more processor cores, wherein each processor core may be a CPU or a GPU. The memory 104 may be located on the same die as the processor 102, or may be located separately from the processor 102. The memory 104 may include a volatile or non-volatile memory, for example, random access memory (RAM), dynamic RAM, or a cache.

The storage 106 may include a fixed or removable storage, for example, a hard disk drive, a solid state drive, an optical disk, or a flash drive. The input devices 108 may include a keyboard, a keypad, a touch screen, a touch pad, a detector, a microphone, an accelerometer, a gyroscope, a biometric scanner, or a network connection (e.g., a wireless local area network card for transmission and/or reception of wireless IEEE 802 signals). The output devices 110 may include a display, a speaker, a printer, a haptic feedback device, one or more lights, an antenna, or a network connection (e.g., a wireless local area network card for transmission and/or reception of wireless IEEE 802 signals).

The input driver 112 communicates with the processor 102 and the input devices 108, and permits the processor 102 to receive input from the input devices 108. The output driver 114 communicates with the processor 102 and the output devices 110, and permits the processor 102 to send output to the output devices 110. It is noted that the input driver 112 and the output driver 114 are optional components, and that the device 100 will operate in the same manner if the input driver 112 and the output driver 114 are not present.

An instruction set architecture (ISA) defines at least an instruction set that may be decoded and executed by a processor. There are a number of ISAs including, but not limited to Intel's x86 ISA and ARM's standard ARM ISA, and Thumb ISA. Although the embodiments described herein refer to the ARM or Thumb ISAs as illustrative examples, the methods and apparatus are equally applicable to other ISAs and associated system and processor architectures.

Processors are conventionally designed to process operations or instructions that are typically identified by operation (Op) codes (OpCodes) or instruction codes. Instructions represent the actual work to be performed and represent the issuing of operands to implicit (such as add) or explicit (such as divide) functional units. Instructions may be moved around by a scheduler queue. Operands are the arguments to instructions and may include expressions, registers or constants.

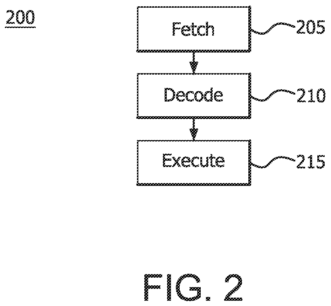

Figure 2 shows an example instruction pipeline 200 for a processor that includes at least a fetch unit 205, a decoder unit 210 and an execution unit 215. The fetch unit 205 fetches instructions from memory (not shown) and sends the instructions to the decoder unit 210. The instructions may be, for example, fixed length ARM instructions, either 32-byte or 16-byte. The decoder unit 210 decodes the registers, contents and context of the fetched instructions and may dispatch fixed length internal instructions (micro-operations or microinstructions (uops)), to one or more execution units or execution/scheduling units 215. The execution unit 215 executes the decoded instructions. The instructions generally have sources that identify the location of input data associated with the uop and destinations that identify the location of output/result data associated with the uop using data register designations. Each instruction can generally be translated, i.e. decoded, into one, two or more uops. The decode unit 210 and execution unit 215 of the processor may include, for example, methods and apparatus for flag handling and immediate handling.

Most ISAs, such as for example the ARM ISA, utilize a variety of flags for conditional instruction execution. The ARM ISA flags may include N for a sign condition, Z for a zero condition, C for a carry condition, V for an overflow condition, Q for a saturation condition and GE, bits 3:0, which is a byte specific carry condition.

Typically, certain types of ARM instructions generate or write specific combinations of flags. For example, a NZ (sign and zero) flag combination may be written by most AArch32 instructions, (where AArch32 is a ARMv8 32-bit execution state, that uses 32-bit general purpose registers, and a 32-bit program counter (PC), stack pointer (SP), and link register (LR) and provides a choice of two instruction sets, A32 and T32). These may include, for example, multiplication (MUL) and multiplication+addition (MLA) which only write these 2 flags. In addition, some varieties of move (MOV) instruction and logical instructions only write these 2 flags. The NZC (sign, zero and carry) flag combination are written by some flavors of MOV and logical instructions such as AArch32 AND, logical shift left (LSL), rotate right register (ROR), MOV, and the like. The NZCV (sign, zero, carry and overflow) flag combination are all written by arithmetic instructions such as AArch32 ADD, SUB, and the like and by all AArch64 ops which write flags. The Q flag is only written by saturating arithmetic instructions such as signal saturation (SSAT), saturation addition (QADD), saturation subtraction (QSUB) and the like. The GE flag, (which is a group of 4 flags), is written by Single Instruction Multiple Data (SIMD) instructions executed over the execution unit general purpose registers and include instructions such as ADD16, SUB16, and the like. In 64 bit ARM instructions (AArch64), flags Q and GE cannot be written and are always 0.

It is noted that most ARM instructions read flags in either one or two groups. All condition codes require 2 groups only. The two exceptions are predication and flag copy. With respect to predication, the condition codes for predication can be created from 2 groups only. For a predicated instruction which writes flags, the old flag values must be copied when the predicate is false. Between the flags used in the condition codes and the ones that need to be copied, these instructions can require upto 3 flag sources. With respect to flag copy, some instructions are capable of copying all flags.

It is noted that AArch64 ISA instructions can only write all condition flags at the same time (NZCV) and no additional dependencies are created between different instructions which write flags, therefore a single flag group may be provided.

Described herein are embodiments of methods and processors for flag renaming in groups to eliminate dependencies of instructions. The elimination of the dependencies improves performance and out-of-order scheduling. In general, decoder and execution units in the processor may be configured to rename flags into groups that allow each group to be treated separately as appropriate. This flag renaming eliminates flag dependencies with respect to instructions. For example, the ARM ISA flags may be renamed into 5 groups, namely, NZ, C, V, Q and GE. This allows any 32 bit ARM instruction (AArch32) to write exactly the flags that the instruction wants without having to create merge dependencies.

Typically, for flag handling purposes, the N, Z, C, V, Q and GE flags are handled as a single entity or combination. This causes a lot of merge dependencies between instructions which partially write flags. For example, if there were instructions writing flag Z only, then flag N would need to be carried as a dependency (sourced and copied unchanged into the result). For the ARM and Thumb32 ISAs, the effect is somewhat limited since the compiler can decide which instructions need to produce flags, (and thus get extra source dependencies). For the Thumb16 ISA, the flag destination is implicit so there is no way to limit the penalty.

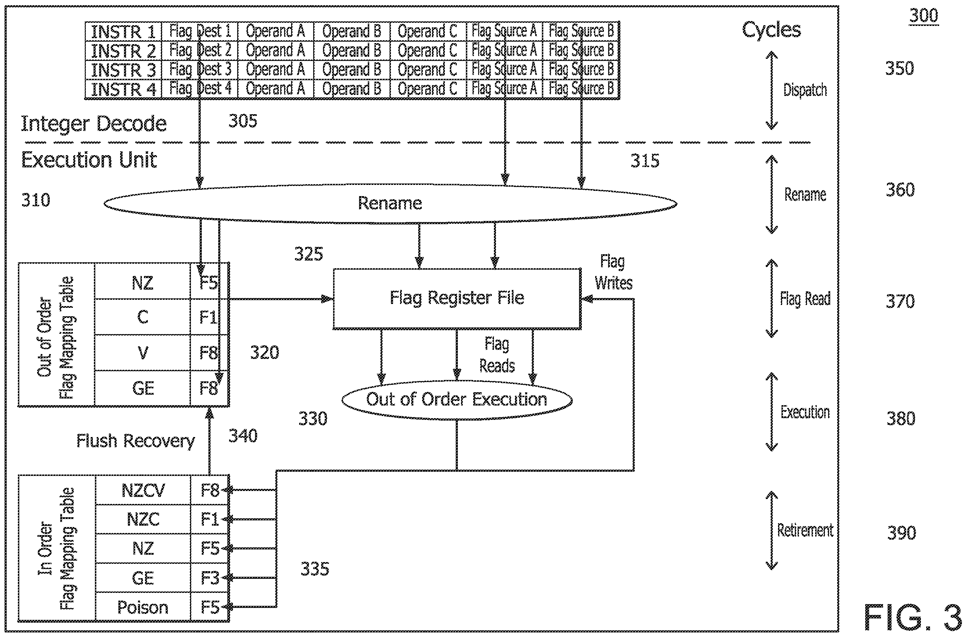

Figure 3 is an embodiment of a processor 300 for flag handling in accordance with an embodiment. The processor 300 includes an integer decode unit 305 and an execution unit 310. The decoder unit 305 receives instructions, INSTR 1, INSTR 2, INSTR 3 and INSTR 4, from a fetch unit (not shown). Each instruction can include a flag destination (Flag Dest 1, Flag Dest 2, Flag Dest 3, and Flag Dest 4), an operand A, an operand B, an operand C, a flag source A and a flag source B, (noting that most ARM instructions read flags in either one or two groups and that all condition codes require 2 groups only). These instructions are appropriately dispatched to the execution unit 310 during a dispatch cycle 350.

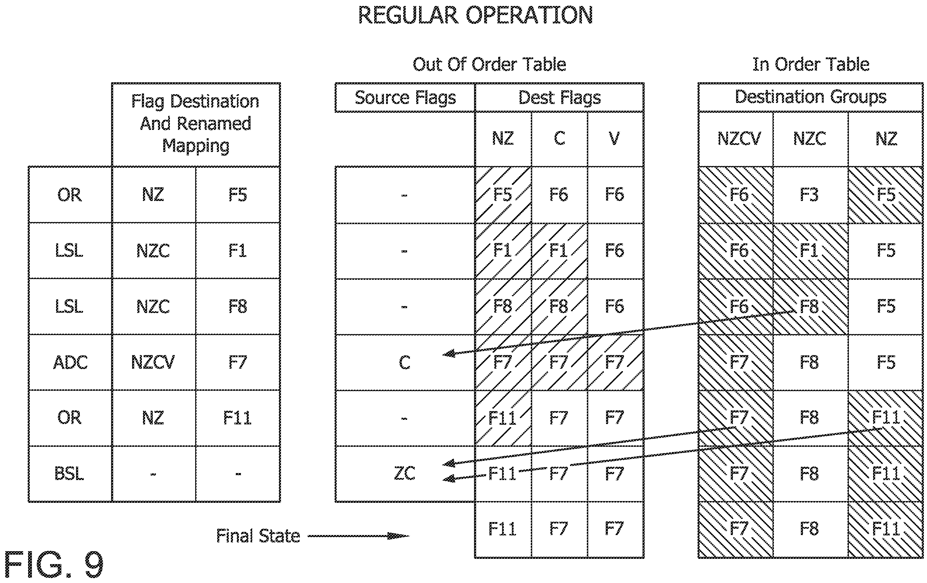

The execution unit 310, during rename cycle 360, uses a rename circuit 315 to rename the flags in Flag Dest 1, Flag Dest 2, Flag Dest 3, and Flag Dest 4, by assigning a Free Flag Register Number (FRN) to each of the destination flags and writes the newly renamed flags to an Out of Order Flag Mapping Table 320, affecting only the flag groups currently written to and keeping the other flag groups intact. For purposes of illustration, the flag renaming may use 4 flag groups, namely, NZ, C, V, and GE. Other flag groups may be used. Similarly each of the flag sources A and B from INSTR1, INSTR2, INSTR3 and INSTR4 are renamed to their corresponding FRNs based on the flag groups. Flags associated with instructions or operations are tracked as entries in a flag register file 325, where the respective entry is assigned a FRN. The execution unit 310 reads the flag values from the flag register file 325 during a flag read cycle 370 and executes instructions out of order (330), (during execution cycle 380), based on true data dependencies since the flags are handled in separate groups as described herein. The execution unit 310 writes the resulting flags back to the flag register file 325 and also to the In Order Flag Mapping Table 335 during a retirement cycle 390. The operational aspects of Figure 3 are described herein with respect to Figures 9-12.

In an illustrative example with reference to Figures 3-8, consider the code snippet shown in Table 1.

**Table 1**

| | | |
|---|---|---|
| Loop: | or r1, r2, r3 | ;logical OR between r2 and r3, with the result written into r1 |
| | lsl r7, r7, #5 | ;logical shift left of r7 with 5 positions, with the result written into r7 |
| | and r6, r2, r8 | ;logical AND between r2 and r8, with the result written into r6 |
| | adc r5, r1, #2 | ;add with carry 2 to r1, with the result written into r5 |
| | or r4, r7, r2 | ;logical OR between r7 and r2, with the result written into r4 |
| | bls loop | ;if "less", branch back to the beginning of the loop |

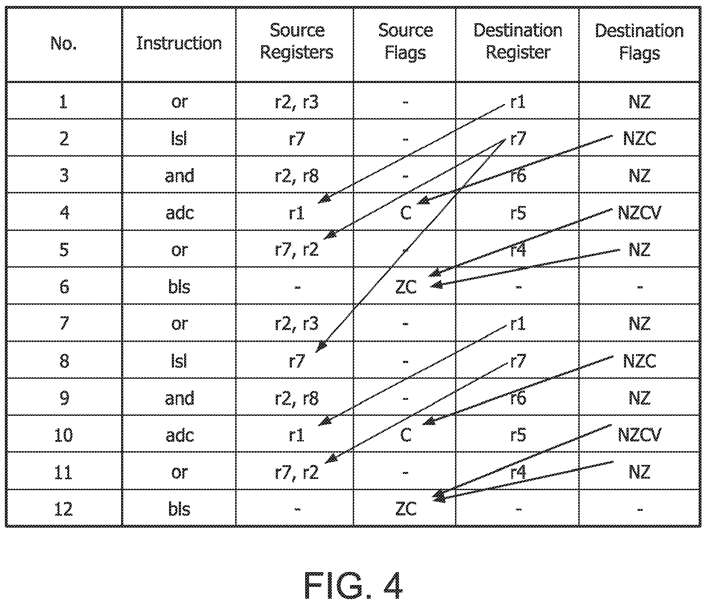

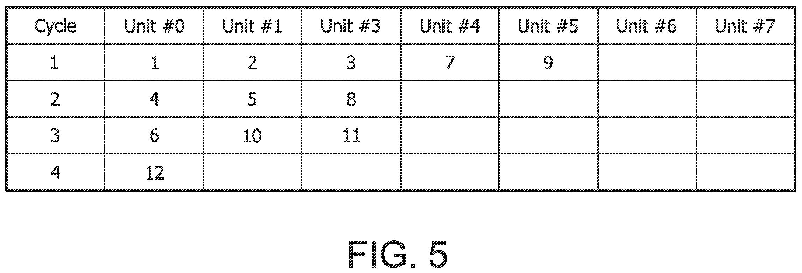

Figure 4 illustrates the true data dependencies between the source registers and the destination register. For example, the ADC instruction uses register r1 as a source register but the value in r1 depends on the execution of the OR instruction. Figure 4 also illustrates the flag dependencies. For example, the ADC instruction has a C flag as a source flag. However, the C flag is dependent on what happens with respect to the LSL instruction which generates a NZC flag combination. Therefore, the ADC instruction is dependent on execution of the LSL instruction. Consequently, the ADC instruction is ultimately dependent on the OR and LSL instructions. As a result, the ADC instruction has to wait until the OR and LSL instructions are executed. This results in a best possible execution order, based solely on true data dependencies, as shown in Figure 5. It is noted that the best case scenario is that all of the instructions are completed in one cycle using the maximum number of execution units, which may be, for example 12 execution units. The worst case scenario is that it takes 12 cycles to complete the code snippet because of the data and flag dependencies.

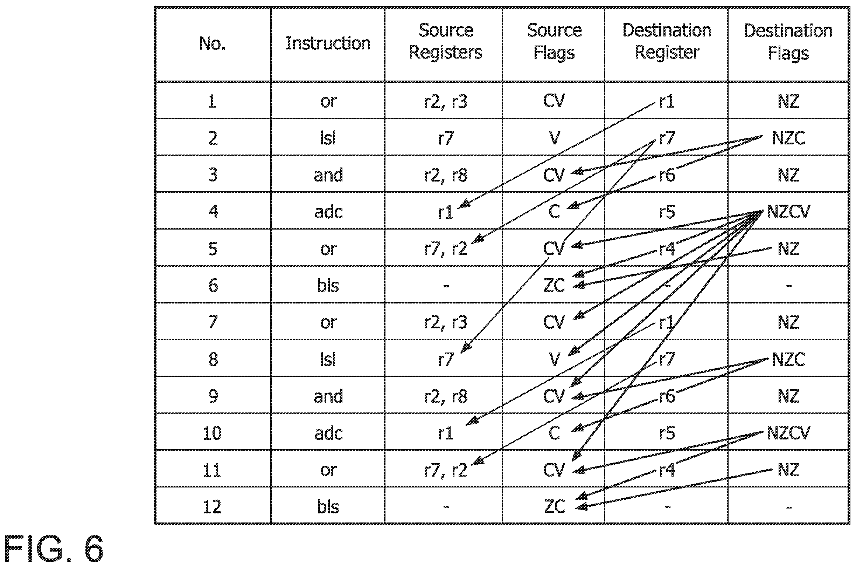

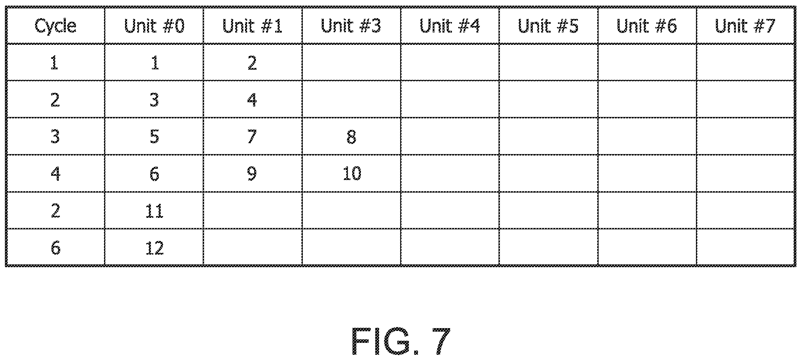

Figure 6 illustrates an example where flags are renamed as a single entity flag combination, such as for example, NZCV. The register dependencies are the same as in Figure 4. In this situation, when an instruction or operation executes that only generates or writes 2 flags of the NZCV entity, the execution unit must read the previous values of other two flags from a flag register and merge them into the NZCV result. For example, the logical instructions, OR (#5, # 7, #11) and AND (#9) only generate a NZ flag combination. Therefore, these instructions have to wait for the ADC instruction (#4) to execute to obtain the CV flag conditions to complete the NZCV single entity. These dependencies result in the execution order shown in Figure 7. A comparison of Figure 5 and Figure 7 shows that the single entity flag combination requires 2 more cycles than the optimal solution or 50% more time.

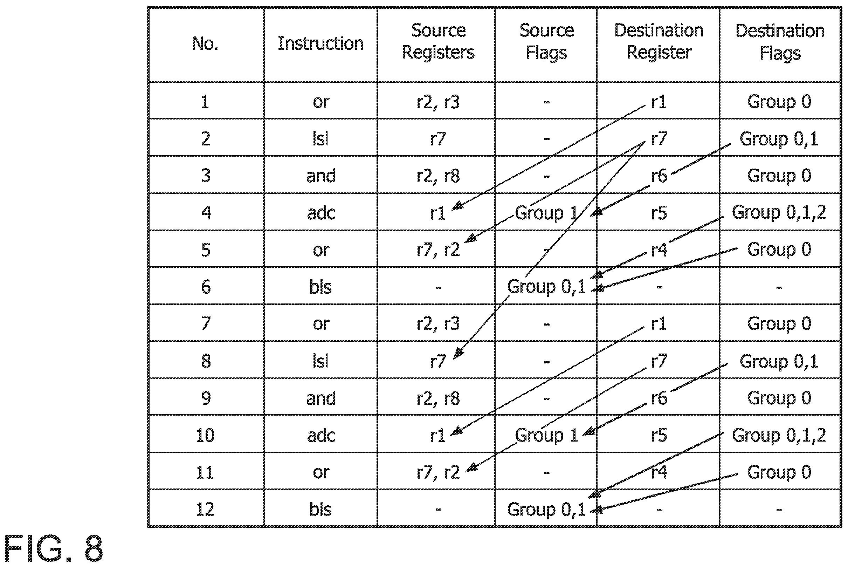

Figure 8 illustrates the embodiment where the renaming flag convention follows the true data dependencies. In this example, the flags NZ, C and V can be written independently as Groups 0, 1 and 2, respectively. By renaming the flags into 3 flag groups (NZ, C, V), for example, each of the instructions will write an entire flag group (or multiple of them), leaving the other mappings unchanged. That way there is no need to create any unnecessary dependencies. This effectively removes any false dependencies.

Described herein are methods and apparatus for handling a shift-by-zero (SBZ). Typically, regular shift/rotate instructions write NZC flags, leaving the V flag unmodified. The N flag copies the sign bit, (bit 31 of the result), the Z flag is set if the result is all zero, and the C flag copies the last bit shifted by the operation. In the event the shift amount is 0, the C flag is left unmodified. This same behavior is carried over to many instructions which allow a shifted second operand, and the C flag is generated from the shift. Typical examples are the logical instructions such as AND, ORR, BIC, and the like. These instructions set the N and Z flags based on the result of the logical operation, but they set the C flag based on the result of the optional second-source shift. If the shift amount is non-zero, the instructions create a new C flag. If the shift amount is zero, these instructions must preserve the old C flag. Counterexamples are arithmetic instructions such as ADD, SUB, and the like. These instructions allow a shifted second operand, but they do not set the C flag based on the result of the shift. The C flag is set based on the ALU result, (bit 33 of the computation).

The AArch32 ISA provides multiple encodings for each of these instructions. In some cases, the shift amount comes from an immediate embedded in the instruction encoding. In other cases, the shift amount comes from a register.

When the shift amount is explicitly encoded in the instruction, the decoder unit can decide what the instruction needs to do prior to renaming. For example, if the shift amount is zero, the instruction decodes with no explicit shift operation and the instruction only writes NZ. If the shift amount is 1, 2 or 3, the instruction decodes without an explicit shift op, but the instruction will write NZC. The execution unit will have the capability to shift the operand by up to 3 positions and also select the C flag for these cases. If the shift amount is greater than 3, the instruction decodes with an explicit shift operation. The shift operation gets the C flag as destination, while the logical operation, (which uses the shifted data), only writes NZ.

When the shift amount is obtained from a general purpose register (GPR), the decoder unit cannot decide upfront whether the amount is zero or not. For example, the instruction AND r0, r1, r2 may be decoded as a single uop, writing NZ only. In another example, the instruction AND r0, r1, r2 LSL#1 may be decoded as a single uop, writing NZ and C. In another example, the instruction AND r0, r1, r2 LSL#5 may be decoded as a double uop, (LSL followed by AND). The LSL instruction writes the C flag, while the AND instruction writes the NZ flag combination. In another example, the instruction AND r0, r1, r2 LSL r3 may be decoded as a double uop, (LSL followed by AND). The LSL instruction writes the C flag and can have SBZ behavior, while the AND instructions writes a NZ flag combination.

For cases when the shift amount cannot be determined during decode, a flag poisoning solution may be implemented as described herein below with respect to Figures 3 and 9-12. In the figures, the shaded boxes in the Out of Order Table refer to the flag groups that the current instruction or operation is updating. All of the other flag groups are left untouched and retain the previous value. The shaded boxes in the In Order Table refer to the valid flag groups for the current architectural state. The latest values for all the flags, N, Z, C, V, and GE, are derived from these valid groups only. The contents of the non-shaded boxes in the In Order Table are not relevant. The status of whether a group is valid is maintained using a valid bit in the In Order Table.

Figure 9 is an example illustration of normal or regular operation of the flags. In this example, at execution time, the destination flags are renamed to one of the Free FRNs. This is done out of order since the instructions or operations are not executed in program order. The Out Of Order Table is indexed by source flag groups. This makes it convenient to assign sources to younger operations. The next instruction, if sourcing one of the flags previously written by an older operation, gets the destination register of the older operation as its source register. For example, the ADC instruction sources a C flag. The last write to the C flag was by the LSL instruction and the LSL instruction's C flag was mapped to register F8. Therefore, the ADC instruction sources register F8 to get the value of the C flag. The operations retire in order, i.e., in age order. The In Order Table tracks mapping of flags to FRNs to retired operations. This table is indexed by destination flag groups. For example, the ADC instruction writes to the NZCV flags. The In Order Table marks register F7 as the only valid group, since F7 has values for all of the flags. Once the next OR instruction retires, the NZ flags are mapped to register F11. Therefore, registers F7 and F11 are both valid. Register F11 has a value for the NZ flags and register F7 has the values for the CV flags. The BSL instruction sources the ZC flags. Since the ADC instruction is the last operation to write the C flag, the BSL instruction sources register F7, (destination FRN of ADC), for the C flag. Similarly, the Z flag is sourced from register F11 which is the destination FRN of the OR instruction.

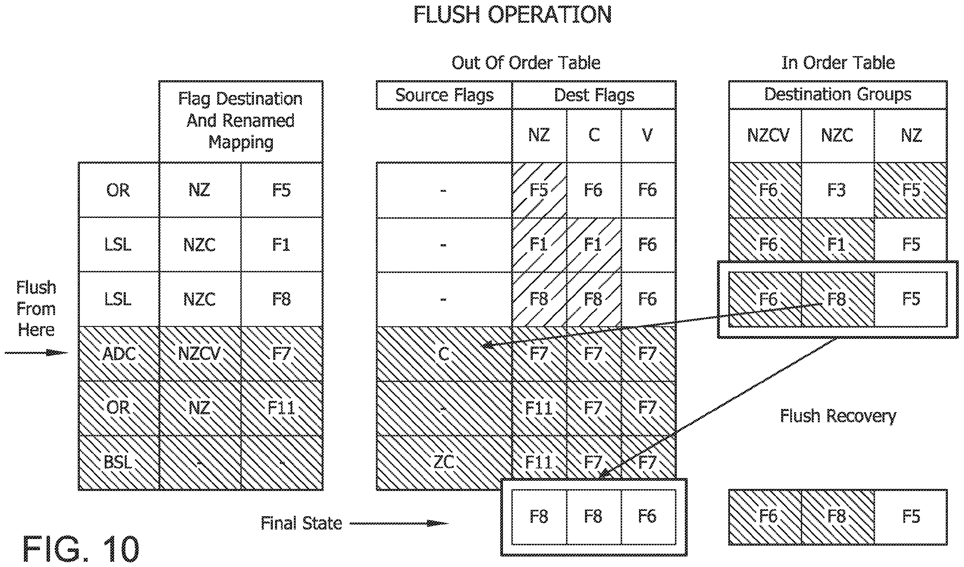

Referring now to Figure 10, on a flush, the Out of Order Table is restored from the In Order Table. A flush operation can happen for a number of reasons and in all these cases the speculative state of the machine has to be rolled back, i.e., the Out of Order Table in this case. This is implemented similarly to the operation retirement as explained above. In the flush operation example, registers F6 and F8 are valid after the LSL instruction retires. Since the NZC flag group mapping is valid, the Out of Order Table's mapping for the NZ and C flags are updated to register F8. The NZC flags being valid along with the NZCV flags means that register F6, (mapped to NZCV), has a value for just the V flag.

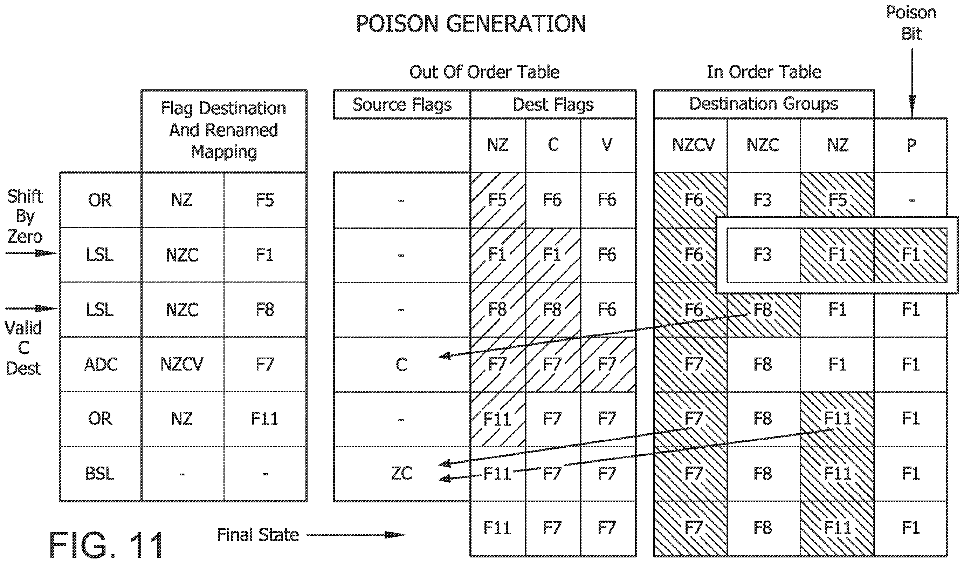

Figure 11 is an example illustration of flag operation and flush for poison flag operation. In this example, if the first LSL instruction is a SBZ producer, (i.e., a shift by zero is performed), the LSL instruction destination FRN, F1 is marked as poisoned. The Out of Order Table is updated before execution is complete and hence the C flag is mapped to register F1, (now poisoned). In such a case, the architectural expectation is that the C flag should still be mapped to its previous FRN, which in this case is F6. When the LSL instruction retires, knowing that the C flag is poisoned, the Dest Flags of the LSL instruction is changed from NZC to NZ. Therefore, the In Order Table updates the column for NZ only and marks it as valid. The register F1 is always mapped to the Poison flag in the In Order Table. Since register F6, (for NZCV), and register F1, (for NZ), are both valid, the In Order Table mapping for the C flag is register F6, which is the correct mapping architecturally.

As mentioned, in most SBZ cases, a valid C flag is over written before there is an opportunity to source the poisoned C flag. This is a good result. In this example, the very next instruction, also an LSL instruction writes a valid C flag. Since the second LSL instruction is not a shift by zero case, the C flag is no longer poisoned. Hence, when the second LSL instruction retires, the LSL instruction updates the NZC mapping in the In Order Table and also invalidates the Poison Flag from the In Order Table. Therefore, when the ADC instruction sources the C flag, the ADC instruction gets register F8 as the source register for the C flag and retires normally.

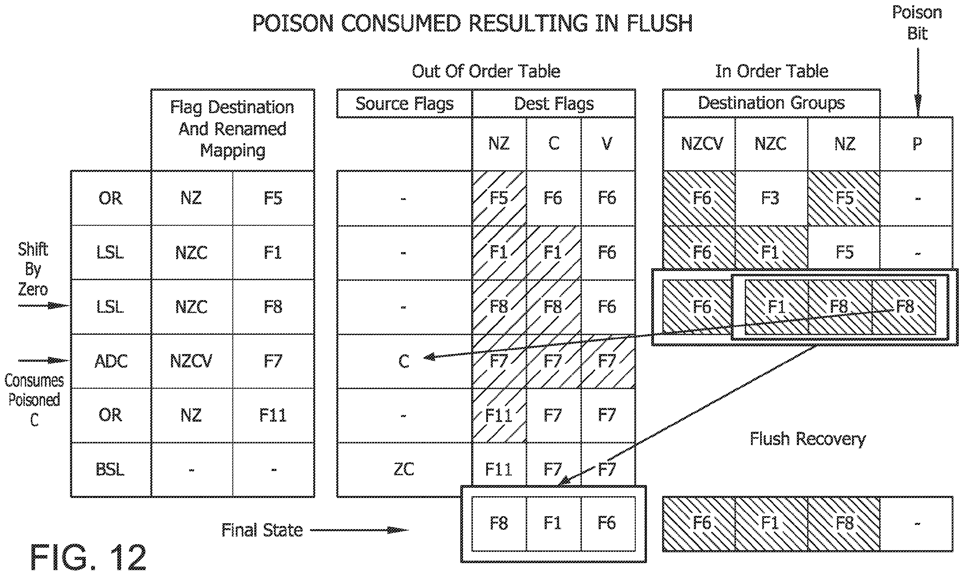

Referring now to Figure 12, if the second LSL instruction was a SBZ, the ADC instruction would end up sourcing register F8 for the C flag, which is poisoned, (as described herein above). This is architecturally incorrect. The ADC instruction should have sourced the register F1, which contains the mapping of the C flag previous to the SBZ LSL instruction. Therefore, the ADC instruction needs to resync and take a flush, i.e., the ADC instruction needs to be re-dispatched and re-executed. Therefore, the ADC instruction is dispatched again, and the Out Of Order Table needs to be corrected. This may be accomplished by using the flush recovery mechanism to construct the Out Of Order table from the In Order Table. Once the flushing is complete, the C flag is then correctly mapped to the register F1, (destination of the first LSL instruction) and the NZ is correctly mapped to the register F8, (destination of the second LSL instruction).

The poisoned flag indicator is set to 1 only for flags produced by a shift/rotate instruction/operation with the shift amount equal to zero. All other operations write the poisoned flag indicator as 0. The In Order Table is also responsible for returning the previous FRN held to the Free FRN list. That is, the FRN is re-circulated for use by the renaming circuit 315. For example, when an operation producing the flags NZCV retires, the FRN held by the NZCV flags are returned to a free FRN list and the retired operation's FRN is updated to the new FRN for the retiring operation. The flush restore relies on the In Order Table to restore the Out Of Order Table to that of the operation before the operation that caused the resync (340).

This mechanism relies on the fact that shifts by zero are infrequent, and flags produced by shifts are generally not sourced. Accordingly, the need to resync occurs very infrequently resulting in a minimal impact on performance. Also, any logical instruction which uses a "shift-by-register" second operand may decode into a shift operation followed by the regular logical operation. The shift operation will have the same SBZ behavior as the shift/rotate operations coming from shift/rotate instructions.

In another embodiment, an alternative to poisoning flags is to source the C flag in all shift operations which write flags, (when the shift amount comes from a register), and MUX it to the output flags if the shift amount turns out to be zero. This introduces a new data dependency and can reduce performance significantly if these cases are common.

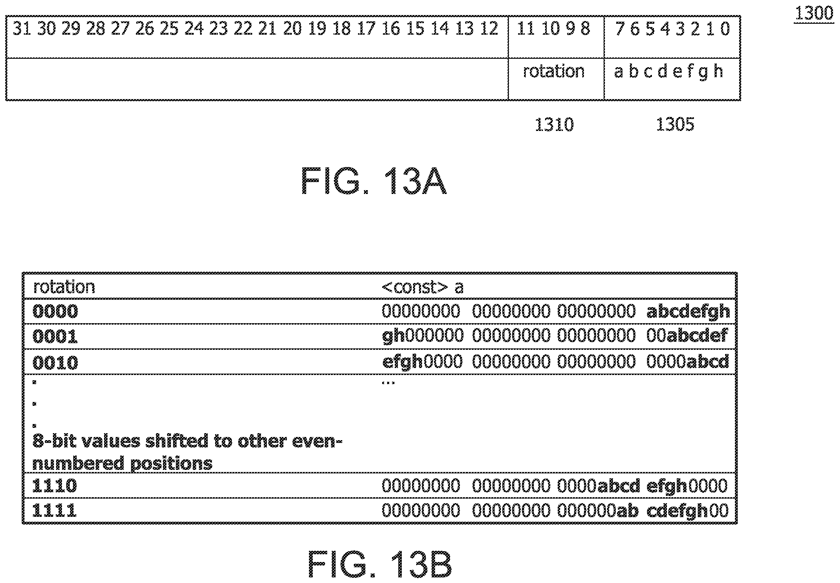

Described herein are methods and apparatus for handling immediate values embedded in instructions in accordance with some embodiments. In some ISAs, such as the ARM and the Thumb ISAs, there are some instructions which need immediate modification based on some fields from the instruction itself. Both the immediate constant and encoding are bit fields coming from the instruction. For example, for the instruction ADD Rd, Ra, Imm32, the value for Imm32 is derived from an 8 bit field of the instruction and encoding bits. Figure 13A illustrates an example of an encoding of a modified immediate constant in an ARM instruction 1300 where bits 0-7 are a hexadecimal representation of an immediate constant value 1305, and bits 8-11 are the encoding bits 1310. Figure 13B illustrates the immediate constant value 1305 in binary form as it relates abcdefgh to the encoding bits 1310.

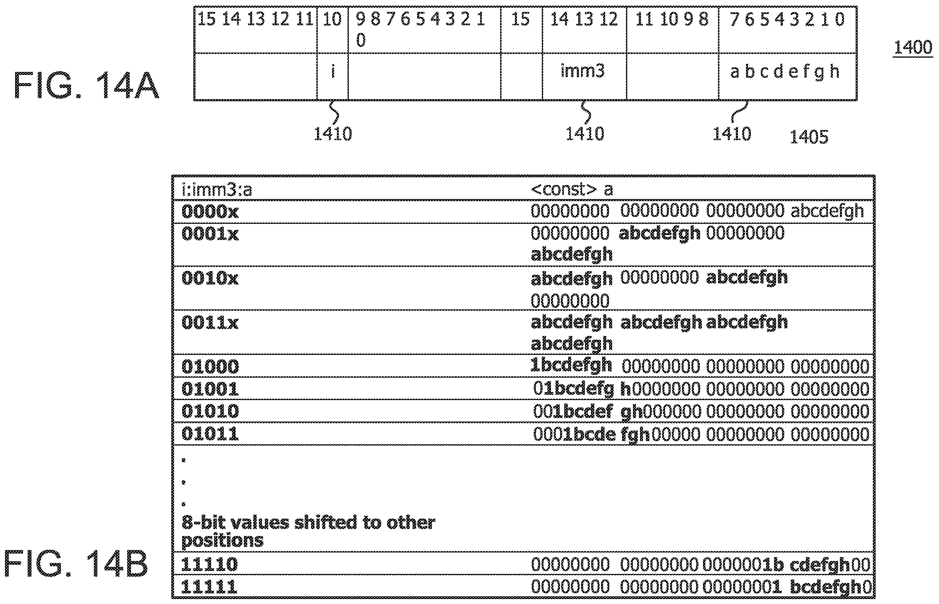

Figure 14A illustrate the encoding of a modified immediate constant in an Thumb instruction 1400, where bits 0-7 are a hexadecimal representation of an immediate constant value 1405 and bits 7 and 12-14 in the lower word and bit 10 in the upper word are the encoding bits 1410. Figure 14B illustrates the immediate constant value 1405 in binary form as it relates abcdefgh to the encoding bits 1410. In assembly syntax, the immediate value is specified in the usual way, (a decimal number by default).

Figures 13A, 13B, 14A and 14B illustrate some of the modifications supported in the ARM ISA. In addition, there are other encodings that are embedded in instructions such as "Decode Bit Mask", "Shift left", "Sign Extension", and "Zero Extension", which require modification before executing an instruction such as ADD or SUB.

There are many encodings that need to be passed on to an execution unit. It would be hard to encode them in opcode space and then do this modification at execution time. Moreover, extra cycles would be needed to do the immediate modification. If the expansion is done in the decode unit, then the number of wires will increase substantially across the execution and decode units. This will increase the power and area requirements and also lead to timing problems as there are limited route resources.

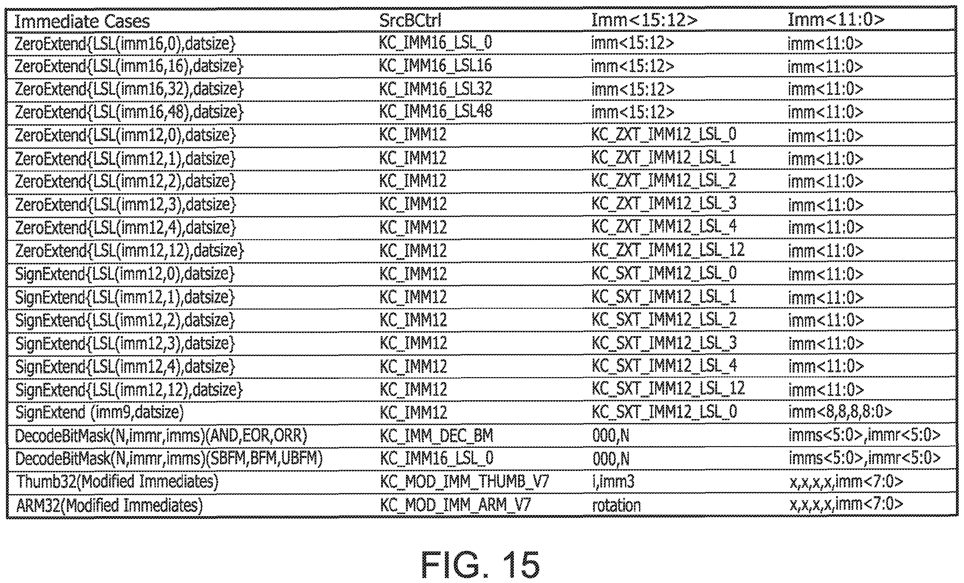

In an embodiment, the handling of immediate values embedded in instructions may be achieved by adding a 16 bit immediate bus and a 4 bit encoding/control bus, (shown as SrcBCtl in Figure 15), at the interface between the decode and execution units. The instructions typically need 8 -16 bits of immediate data which then gets converted to 32 or 64 bits. The encoding space is minimized by overloading encoding information onto the 16 bit immediate bus, thus efficiently using storage and route resource while transferring information from the decode and execution units.

Figure 15 provides a sampling of immediate cases using the 16 bit immediate bus and a 4 bit encoding/control bus. The first column details the nature of the needed modification, the second column is the 4 encoding bits, (which is SrcBCtl<3:0>), and the third and fourth columns are the 16 bit immediate bus. In Figure 15, the abbreviations are: LSL - Logical Left Shift (Data, <shiftamount>); ZeroExtend - Zeroing out the top 48/16 bits based on data size; and SignExtend - Copying the 15th bit on to the top 48/16 bits based on data size. As illustrate in Figure 15, the immediate may need 8, 12 or 16 bits. In the event of an 8 or 12 bit immediate, the upper 4 bits of the immediate bus may contain the encoding bits and the encoding/control bus may indicate the ISA type. In the event of a 16 bit immediate, the encoding/control bus contains the encoding bits. The SrcBCtl<3:0> will have the information of when to look at the top four bits of the immediate bus and when the data should be used as a whole. Thus, the overall encoding space is increased without needing additional bits at the interface.

In general, a processor includes at least a decode unit and an execution unit. The decode unit receives instructions from a fetch unit. Each instruction includes at least an operand A, operand B, operand C and other bits. A 16 bit immediate bus and a 4 bit encoding/control bus is added from the decode unit to the execution unit for handling some immediate values embedded in the instructions. In effect, the immediate bus and encoding/control bus tells how to expand the data bits to generate the final immediate data which gets consumed. The immediate data is stored directly into an array after shift and alignment, i.e., after modification and/or expansion. For example, circuitry, (including at least the 16 bit immediate bus and the 4 bit encoding/control bus), can be configured such that expanded immediates, e.g. modified immediates expanded to 64 bits, can only go to a specific source, whereas uops reference multiple sources.

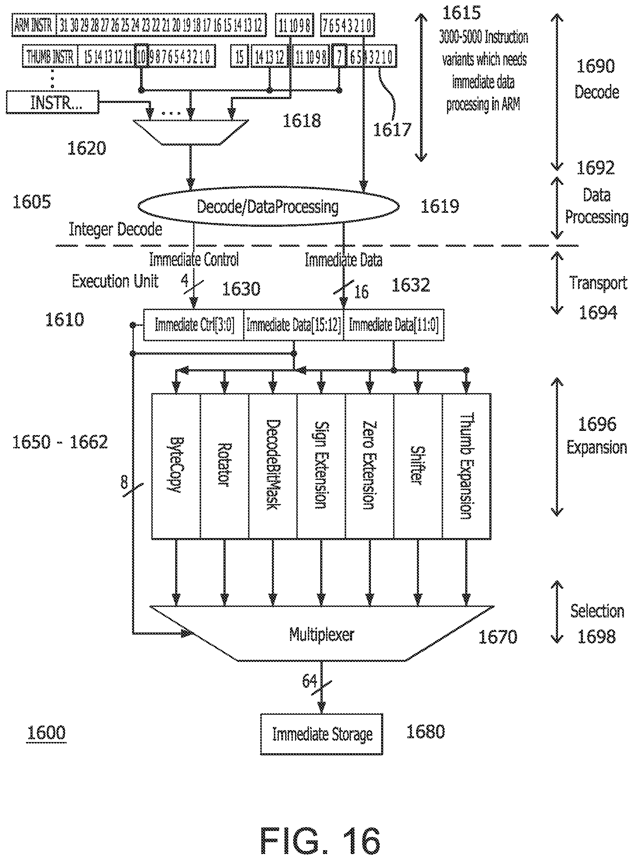

Figure 16 is an example block diagram of an embodiment for handling immediate values embedded in instructions. A processor 1600 includes at least an integer decode unit 1605 and an execution unit 1610. The decode unit 1605 can receive, for example, an ARM ISA instruction 1615 and/or a Thumb ISA instruction 1617. The instructions 1615 and 1617 are decoded during a decode cycle 1690 and control bits 1618, as described herein above, are directed to a multiplexer 1620. The control bits 1618 are processed and passed to the execution unit 1610 using an immediate control bus 1630 during a transport cycle 1694. The data bits 1619 are dispatched and processed during a data processing cycle 1692 and passed to the execution unit 1610 using an immediate data bus 1632 during the transport cycle 1894.

As described herein above, depending on the nature of the immediate, i.e., whether it is an 8, 12 or 16 bit immediate, the appropriate control or encoding bits, (i.e., Immediate Ctrl [3:0] and/or Immediate Data [15:12]), will determine the nature of the processing during the expansion cycle. For example, the control or encoding bits may require a Thumb expansion 1650, a shifter 1652, a zero extension 1654, a sign extension 1656, a decode bit mask 1658, a rotator 1660 and/or a byte copy 1662. The output of these operations 1650-1662 and the appropriate control or encoding bits are directed to a multiplexer 1670, which in turn are stored in immediate storage 1680 during a selection cycle 1698. The expansion cycle is not an extra execution cycle but is performed nearly simultaneously and/or in parallel with the processing of the actual instruction or operation. As a result, the immediate constant value is available in the immediate storage 1680 for use and execution by the actual instruction.

Described herein are methods and apparatus to handle carry flag from modified immediates. There are some instructions that write out a carry flag based on the rotation of the immediates which is done at dispatch time from the decode unit. Most of them are logical instructions. For ARM ISA v7, there are roughly 8 instructions, for example AND, EOR, TST, TEQ, ORR, MOV, BIC, MVN, which are in this category. As most of the regular logical instructions do not update the carry flag, a carry flag generated by immediate rotation may simply be forwarded to the execution unit and can be written into a FRF (flag register file) at execute time. An extra bit of storage in an immediate storage to store this carry flag generated by modified immediates may not be needed where the circuitry is configured to always do rotate right and the data size is 32, since it is guaranteed that bit 31 of the immediate storage read data will be the final carry flag that needs to updated for that particular uop.

The only case to which this may not apply is the shift by zero case as discussed herein above. As rotation amount is coming from the operation code, the shift by zero can be detected early and disabling a destflag enable for the C flag can be performed so that it is immaterial what is been written in FRF and the next operation will be sourced with proper carry which was generated previously. In the case of ARM v8, however, there are AND and BIC instructions which update carry flag as "0". For such cases, two operations, ANDv8, and BICV8, may be provided to differentiate the ones which writes the C flag and the ones in ARM v7 which write a carry flag generated by actual rotation of the immediate.

In general, a method for flag handling includes determining at least one destination flag from dispatched instructions; and renaming the at least one destination flag by assigning a free flag register number that is associated with at least one flag group corresponding to the at least one destination flag, wherein a flag group corresponds to an independent flag. The method may include writing each renamed flag to an out of order flag mapping table, wherein flag groups not corresponding to the at least one destination flag are unaffected. The method may include executing the dispatched instructions out of order based on data dependency. The method may include writing flags resulting from the out of order execution to an in order flag mapping table during a retirement cycle, wherein the in order table tracks mapping of flags to retired dispatched instructions. The in order flag mapping table may maintain whether a specific flag group is valid. The out of order flag mapping table may be indexed by source flag groups. The in order flag mapping table may restore a flushed out of order table. The in order flag mapping table may maintain a poison bit for a shift by zero condition. The method may include setting a poison bit on a condition that a shift by zero occurs; consuming the poison bit on a condition that a second shift by zero occurs; flushing the out of order flag mapping table on a condition that the poison bit is consumed; and re-dispatching and re-executing an instruction that resulted in the consumption of the poison bit.

In general, a processor includes an execution unit configured to determine at least one destination flag from dispatched instructions; and a renaming circuit configured to rename the at least one destination flag by assigning a free flag register number that is associated with at least one flag group corresponding to the at least one destination flag, wherein a flag group corresponds to an independent flag. The processor may include an out of order flag mapping table, wherein the execution unit is further configured to write each renamed flag to the out of order flag mapping table, wherein flag groups not corresponding to the at least one destination flag are unaffected. The execution unit may be further configured to execute the dispatched instructions out of order based on data dependency. The processor may further include an in order flag mapping table, wherein the execution unit is further configured to write flags resulting from the out of order execution to the in order flag mapping table during a retirement cycle, wherein the in order flag mapping table tracks mapping of flags to retired dispatched instructions. The in order flag mapping table may maintain whether a specific flag group is valid. The the out of order flag mapping table may be indexed by source flag groups. The in order flag mapping table may restore a flushed out of order table. The in order flag mapping table may maintain a poison bit for a shift by zero condition. The execution unit may be configured to set a poison bit on a condition that a shift by zero occurs, to consume the poison bit on a condition that a second shift by zero occurs, to flush the out of order flag mapping table on a condition that the poison bit is consumed and to re-execute a re-dispatched instruction that resulted in the consumption of the poison bit. The processor may include a decode unit; a 16 bit immediate bus configured to interface between the decode unit and the execution unit; and a 4 bit control bus configured to interface between the decode unit and the execution unit, wherein a combination of the 16 bit immediate bus and the 4 bit control bus is configured to carry encoding information for instructions having an immediate constant and wherein the 16 bit immediate bus is configured to carry the immediate constant.

A non-transitory computer-readable storage medium storing a set of instructions for execution by a general purpose computer to perform flag handling in a processor includes a determining code segment for determining at least one destination flag from dispatched instructions; and a renaming code segment for renaming the at least one destination flag by assigning a free flag register number that is associated with at least one flag group corresponding to the at least one destination flag, wherein a flag group corresponds to an independent flag. The instructions are hardware description language (HDL) instructions used for the manufacture of a device.

In general, a processor includes a decode unit; a 16 bit immediate bus configured to interface between the decode unit and the execution unit; and a 4 bit control bus configured to interface between the decode unit and the execution unit, wherein a combination of the 16 bit immediate bus and the 4 bit control bus is configured to carry encoding information for instructions having an immediate constant and wherein the 16 bit immediate bus is configured to carry the immediate constant. The encoding information for instructions having an immediate constant is compressed into the combination of the 16 bit immediate bus and the 4 bit control bus using a multiplexor. The upper 4 bits of the 16 bit immediate bus may be used for carrying the encoding information for certain instructions. The encoding information determines that at least one of Thumb expansion, shifting, zero extension, sign extension, decode bit mask, rotation and byte copy operation/expansion is performed. The output of the operation/expansion and the encoding information are multiplexed and stored in immediate storage for availability by the instruction. A carry flag generated during an operation/expansion is forwarded to a flag register file.

It should be understood that many variations are possible based on the disclosure herein. Although features and elements are described above in particular combinations, each feature or element may be used alone without the other features and elements or in various combinations with or without other features and elements.

The methods provided may be implemented in a general purpose computer, a processor, or a processor core. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine. Such processors may be manufactured by configuring a manufacturing process using the results of processed hardware description language (HDL) instructions and other intermediary data including netlists (such instructions capable of being stored on a computer readable media). The results of such processing may be maskworks that are then used in a semiconductor manufacturing process to manufacture a processor which implements aspects of the embodiments.

The methods or flow charts provided herein may be implemented in a computer program, software, or firmware incorporated in a non-transitory computer-readable storage medium for execution by a general purpose computer or a processor. Examples of non-transitory computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

## Claims

1. A method for flag handling, the method comprising:
determining at least one destination flag from dispatched instructions;
renaming the at least one destination flag based on data dependencies of the dispatched instructions by assigning a free flag register number;
writing each renamed flag to an out of order flag mapping table;
writing write flags to an in order flag mapping table, wherein the write flags are generated by an out of order execution of the dispatched instructions; and
performing a flush operation based on the write flags, wherein the flush operation restores the out of order flag mapping table based on the in order flag mapping table.

2. The method of claim 1, wherein flag groups not corresponding to the at least one destination flag are unaffected in the writing of each renamed flag.

3. The method of claim 2, wherein the out of order execution of the dispatched instructions is based on the data dependencies of the dispatched instructions.

4. The method of claim 3, wherein the write flags are written to the in order flag mapping table during a retirement cycle.

5. The method of claim 1, wherein the out of order flag mapping table is indexed by source flag groups.

6. The method of claim 4, further comprising:
setting a poison bit on a condition that the shift by zero occurs;
consuming the poison bit on a condition that a second shift by zero occurs; and
re-dispatching and re-executing an instruction that resulted in the poison bit being consumed,
wherein the flush operation is performed when the poison bit is consumed.

7. A processor, comprising:
an out of order flag mapping table;
an in order flag mapping table;
an execution unit communicatively coupled to the out of order flag mapping table and the in order flag mapping table; and
wherein the execution unit:
determines at least one destination flag from dispatched instructions,
renames the at least one destination flag based on the data dependencies of the dispateched instructions,
writes each renamed flag to the out of order flag mapping table,
writes write flags to the in order flag mapping table, wherein the write flags are generated by an out of order execution of the dispatched instructions, and
performs a flush operation based on the write flags, wherein the flush operation restores the out of order flag mapping table based on the in order flag mapping table.

8. The processor of claim 7, wherein flag groups not corresponding to the at least one destination flag are unaffected when the execution unit writes each renamed flag.

9. The processor of claim 7, wherein the out of order execution of the dispatched instructions is based on the data dependencies.

10. The processor of claim 8, wherein the execution unit writes the write flags to the in order flag mapping table during a retirement cycle.

11. The processor of claim 7, wherein the out of order flag mapping table is indexed by source flag groups.

12. The processor of claim 10, wherein: the execution unit further:
sets a poison bit on a condition that the shift by zero occurs;
consumes the poison bit on a condition that a second shift by zero occurs; and
re-executes a re-dispatched instruction that resulted in the poison bit being consumed, and
wherein the flush operation is performed when the poison bit is consumed.

13. The processor of claim 7, further comprising:
a decode unit;
a 16 bit immediate bus configured to interface between the decode unit and the execution unit; and
a 4 bit control bus configured to interface between the decode unit and the execution unit,
wherein the 16 bit immediate bus is configured to carry an immediate constant and a combination of the 16 bit immediate bus and the 4 bit control bus is configured to carry encoding information for instructions having the immediate constant, wherein the 16 bit immediate bus carries overload of some of the encoding information in the event of a non-16 bit immediate constant.

14. A non-transitory computer-readable storage medium storing a set of instructions for execution by a general purpose computer to perform flag handling in a processor according to claim 7, comprising:
a determining code segment for determining at least one destination flag from dispatched instructions;
a renaming code segment for renaming the at least one destination flag based on data dependencies of the dispatched instructions by assigning a free flag register number;a writing code segment for writing each renamed flag to an out of order flag mapping table and for writing write flags to an in order flag mapping table, wherein the write flags are generated by an out of order execution of the dispatched instructions; and
a flushing code segment for restoring the out of order flag mapping table based on the in order flag mapping table when a flush operation is determined to be required based on the write flags.

15. The non-transitory computer-readable storage medium according to claim 14, wherein the instructions are hardware description language (HDL) instructions which enable manufacturing of a device.

## Patentansprüche

1. Verfahren zur Markierungshandhabung, wobei das Verfahren Folgendes umfasst:
Bestimmen mindestens einer Ziel-Markierung anhand versendeter Anweisungen;
Umbenennen der mindestens einen Zielmarkierung auf Grundlage von Datenabhängigkeiten der versendeten Anweisungen durch Zuweisen einer freien Markierungsregisternummer;
Schreiben jeder umbenannten Markierung in eine Zuordnungstabelle für Out-of-Order-Markierungen;
Schreiben von Schreibmarkierungen in eine Zuordnungstabelle für In-Order-Markierungen, wobei die Schreibmarkierungen durch eine Out-of-Order-Ausführung der versendeten Anweisungen generiert werden; und
Durchführen eines Räumungsvorgangs auf Grundlage der Schreibmarkierungen, wobei der Räumungsvorgang die Zuordnungstabelle für Out-of-Order-Markierungen auf Grundlage der Zuordnungstabelle für In-Order-Markierungen zurücksetzt.

2. Verfahren nach Anspruch 1, wobei Markierungsgruppen, die nicht der mindestens einen Zielmarkierung entsprechen, beim Schreiben der jeweiligen umbenannten Markierungen nicht beeinflusst werden.

3. Verfahren nach Anspruch 2, wobei die Out-of-Order-Ausführung der versendeten Anweisungen auf den Datenabhängigkeiten der versendeten Anweisungen beruhen.

4. Verfahren nach Anspruch 3, wobei die Schreibmarkierungen während eines Abgangszyklus in die Zuordnungstabelle für In-Order-Markierungen geschrieben werden.

5. Verfahren nach Anspruch 1, wobei die Zuordnungstabelle für Out-of-Order-Markierungen nach Herkunftsmarkierungsgruppen indiziert ist.

6. Verfahren nach Anspruch 4, ferner umfassend:
Setzen eines Poison-Bit unter der Bedingung, dass die Nullverschiebung auftritt;
Verbrauchen des Poison-Bit unter der Bedingung, dass eine zweite Nullverschiebung auftritt; und
erneutes Versenden und erneutes Ausführen einer Anweisung, die zum Verbrauchen des Poison-Bit führte,
wobei der Räumungsvorgang durchgeführt wird, wenn das Poison-Bit verbraucht ist.

7. Prozessor, umfassend:
eine Zuordnungstabelle für Out-of-Order-Markierungen;
eine Zuordnungstabelle für In-Order-Markierungen;
eine Ausführungseinheit, die kommunikativ mit der Zuordnungstabelle für Out-of-Order-Markierungen und der Zuordnungstabelle für In-Order-Markierungen gekoppelt ist; und
wobei die Ausführungseinheit Folgendes durchführt:
Bestimmen mindestens einer Zielmarkierung anhand versendeter Anweisungen;
Umbenennen der mindestens einen Zielmarkierung auf Grundlage der Datenabhängigkeiten der versendeten Anweisungen;
Schreiben jeder umbenannten Markierung in eine Zuordnungstabelle für Out-of-Order-Markierungen;
Schreiben von Schreibmarkierungen in die Zuordnungstabelle für In-Order-Markierungen, wobei die Schreibmarkierungen durch eine Out-of-Order-Ausführung der versendeten Anweisungen generiert werden;
und
Durchführen eines Räumungsvorgangs auf Grundlage der Schreibmarkierungen, wobei der Räumungsvorgang die Zuordnungstabelle für Out-of-Order-Markierungen auf Grundlage der Zuordnungstabelle für In-Order-Markierungen zurücksetzt.

8. Prozessor nach Anspruch 7, wobei Markierungsgruppen, die nicht der mindestens einen Zielmarkierung entsprechen, nicht beeinflusst werden, wenn die Ausführungseinheit die jeweiligen umbenannten Markierungen schreibt.

9. Prozessor nach Anspruch 7, wobei die Out-of-Order-Ausführung der versendeten Anweisungen auf den Datenabhängigkeiten beruht.

10. Prozessor nach Anspruch 8, wobei die Ausführungseinheit die Schreibmarkierungen während eines Abgangszyklus in die Zuordnungstabelle für In-Order-Markierungen schreibt.

11. Prozessor nach Anspruch 7, wobei die Zuordnungstabelle für Out-of-Order-Markierungen nach Herkunftsmarkierungsgruppen indiziert ist.

12. Prozessor nach Anspruch 10, wobei die Ausführungseinheit ferner Folgendes durchführt:
Setzen eines Poison-Bit unter der Bedingung, dass die Nullverschiebung auftritt;
Verbrauchen des Poison-Bit unter der Bedingung, dass eine zweite Nullverschiebung auftritt; und
erneutes Ausführen einer erneut versendeten Anweisung, die zum Verbrauchen des Poison-Bit führte; und
wobei der Räumungsvorgang durchgeführt wird, wenn das Poison-Bit verbraucht ist.

13. Prozessor nach Anspruch 7, ferner umfassend:
eine Decodiereinheit ;
ein 16-Bit-Sofortbus, der dazu konfiguriert ist, eine Schnittstelle zwischen der Decodiereinheit und der Ausführungseinheit zu bilden; und
einen 4-Bit-Steuerbus, der dazu konfiguriert ist, eine Schnittstelle zwischen der Decodiereinheit und der Ausführungseinheit zu bilden,
wobei der 16-Bit-Sofortbus dazu konfiguriert ist, eine Sofortkonstante zu tragen, und eine Kombination aus dem 16-Bit-Sofortbus und dem 4-Bit-Steuerbus dazu konfiguriert ist, Codierinformationen für Anweisungen zu tragen, welche die Sofortkonstante aufweisen, wobei der 16-Bit-Sofortbus im Fall einer Nicht-16-Bit-Sofortkonstante eine Überlast einiger der Codierinformationen zu tragen.

14. Nichttransitorisches computerlesbares Speichermedium, das einen Satz von Anweisungen zur Ausführung durch einen Allgemeincomputer, um eine Markierungshandhabung in einem Prozessor nach Anspruch 7 durchzuführen, speichert und Folgendes umfasst:
ein Bestimmungscodesegment zum Bestimmen mindestens einer Zielmarkierung anhand versendeter Anweisungen;
ein Umbenennungscodesegment, zum Umbenennen der mindestens einen Zielmarkierung auf Grundlage von Datenabhängigkeiten der versendeten Anweisungen durch Zuweisen einer freien Markierungsregisternummer; ein Schreibcodesegment zum Schreiben der jeweiligen umbenannten Markierungen in eine Zuordnungstabelle für Out-of-Order-Markierungen und zum Schreiben von Schreibmarkierungen in eine Zuordnungstabelle für In-Order-Markierungen, wobei die Schreibmarkierungen durch eine Out-of-Order-Ausführung der versendeten Anweisungen generiert werden; und
ein Räumungscodesegment zum Zurücksetzen der Zuordnungstabelle für Out-of-Order-Markierungen auf Grundlage der Zuordnungstabelle für In-Order-Markierungen, wenn auf Grundlage der Schreibmarkierungen bestimmt wird, dass ein Räumungsvorgang erforderlich ist.

15. Nichttransitorisches computerlesbares Speichermedium nach Anspruch 14, wobei die es sich bei den Anweisungen um Anweisungen in der Hardwarebeschreibungssprache (hardware description language - HDL) handelt, die das Herstellen einer Vorrichtung ermöglichen.

## Revendications

1. Procédé de gestion de drapeaux, le procédé comprenant :
la détermination d'au moins un drapeau de destination à partir des instructions envoyées ;
le changement de nom de l'au moins un drapeau de destination sur la base des dépendances de données des instructions envoyées par l'attribution d'un numéro de registre de drapeau libre ;
l'écriture de chaque drapeau renommé dans une table de mappage de drapeaux en ordre quelconque ;
l'écriture de drapeaux d'écriture dans une table de mappage de drapeaux dans l'ordre, dans lequel les drapeaux d'écriture sont générés par une exécution en ordre quelconque des instructions envoyées ; et
la réalisation d'une opération de vidage sur la base des drapeaux d'écriture, dans lequel l'opération de vidage restaure la table de mappage de drapeaux en ordre quelconque sur la base de la table de mappage de drapeaux dans l'ordre.

2. Procédé selon la revendication 1, dans lequel les groupes de drapeaux ne correspondant pas à l'au moins un drapeau de destination ne sont pas affectés lors de l'écriture de chaque drapeau renommé.

3. Procédé selon la revendication 2, dans lequel l'exécution en ordre quelconque des instructions envoyées est basée sur les dépendances de données des instructions envoyées.

4. Procédé selon la revendication 3, dans lequel les drapeaux d'écriture sont écrits dans la table de mappage de drapeaux dans l'ordre pendant un cycle de retrait.

5. Procédé selon la revendication 1, dans lequel la table de mappage de drapeaux hors service est indexée par des groupes de drapeaux source.

6. Procédé de la revendication 4, comprenant en outre :
le réglage d'un bit poison à condition que le décalage de zéro se produise ;
la consommation de bit poison à condition qu'un second décalage de zéro se produise ; et
la réexpédition et la réexécution d'une instruction qui a entraîné la consommation du bit poison,
dans lequel l'opération de vidage est effectuée quand le bit poison est consommé.

7. Processeur, comprenant :
une table de mappage de drapeaux en ordre quelconque ;
une table de mappage de drapeaux dans l'ordre ;
une unité d'exécution couplée de manière communicative à la table de mappage de drapeaux en ordre quelconque et à la table de mappage de drapeaux dans l'ordre ; et
dans lequel l'unité d'exécution :
détermine au moins un drapeau de destination à partir des instructions envoyées,
renomme l'au moins un drapeau de destination sur la base des dépendances de données des instructions envoyées,
écrit chaque drapeau renommé dans une table de mappage de drapeaux en ordre quelconque,
écrit des drapeaux d'écriture dans la table de mappage de drapeaux dans l'ordre, dans lequel les drapeaux d'écriture sont générés par une exécution en ordre quelconque des instructions envoyées,
et
réalise une opération de vidage sur la base des drapeaux d'écriture, dans lequel l'opération de vidage restaure la table de mappage de drapeaux en ordre quelconque sur la base de la table de mappage de drapeaux dans l'ordre.

8. Procédé selon la revendication 7, dans lequel les groupes de drapeaux ne correspondant pas à l'au moins un drapeau de destination ne sont pas affectés quand l'unité d'exécution écrit chaque drapeau renommé.

9. Procédé selon la revendication 7, dans lequel l'exécution en ordre quelconque des instructions envoyées est basée sur les dépendances de données.

10. Procédé selon la revendication 8, dans lequel l'unité d'exécution écrit les drapeaux d'écriture dans la table de mappage de drapeaux dans l'ordre pendant un cycle de retrait.

11. Procédé selon la revendication 7, dans lequel la table de mappage de drapeaux en ordre quelconque est indexée par des groupes de drapeaux source.

12. Processeur selon la revendication 10, dans lequel : l'unité d'exécution, en outre :
règle un bit poison à condition que le décalage de zéro se produise ;
consomme le bit poison à condition qu'un second décalage de zéro se produise ; et
réexpédie et réexécute une instruction qui a entraîné la consommation du bit poison, et
dans lequel l'opération de vidage est effectuée quand le bit poison est consommé.

13. Processeur selon la revendication 7, comprenant en outre :
une unité de décodage ;
un bus immédiat 16 bits configuré pour s'interfacer entre l'unité de décodage et l'unité d'exécution ; et
un bus de commande 4 bits configuré pour s'interfacer entre l'unité de décodage et l'unité d'exécution,
dans lequel le bus immédiat 16 bits est configuré pour transporter une constante immédiate et une combinaison du bus immédiat 16 bits et le bus de commande 4 bits est configuré pour transporter des informations de codage pour des instructions ayant la constante immédiate, dans lequel le bus immédiat 16 bits transporte une surcharge de certaines des informations de codage en cas de constante immédiate n'étant pas de 16 bits.

14. Support de stockage non transitoire lisible par ordinateur stockant un ensemble d'instructions à exécuter par un ordinateur à usage général pour effectuer la gestion des drapeaux dans un processeur selon la revendication 7, comprenant :
un segment de code de détermination pour déterminer au moins un drapeau de destination à partir des instructions envoyées ;
un segment de code de changement de nom pour renommer l'au moins un drapeau de destination sur la base des dépendances de données des instructions envoyées en attribuant un numéro de registre de drapeau libre ; un segment de code d'écriture pour écrire chaque drapeau renommé dans une table de mappage de drapeaux en ordre quelconque et pour écrire des drapeaux d'écriture dans une table de mappage de drapeaux dans l'ordre, dans lequel les drapeaux d'écriture sont générés par une exécution en ordre quelconque des instructions envoyées ; et
un segment de code de vidage pour restaurer la table de mappage de drapeaux en ordre quelconque sur la base de la table de mappage de drapeaux dans l'ordre quand une opération de vidage est déterminée comme nécessaire sur la base des drapeaux d'écriture.

15. Support de stockage lisible par ordinateur non transitoire selon la revendication 14, dans lequel les instructions sont des instructions en langage de description matérielle (HDL) qui permettent la fabrication d'un dispositif.
